# EUROPÄISCHE PATENTSCHRIFT

(11) **EP 2 675 764 B1**
(45) Veröffentlichungstag und Bekanntmachung des Hinweises auf die Patenterteilung: **04.04.2018**
(21) Anmeldenummer: 12704708.2
(22) Anmeldetag: 17.02.2012
(51) Int. Cl.: C03C 29/00, B23K 15/00, B23K 26/32, C03C 8/00, C03C 27/02, H01M 2/24, H01M 2/30, H01M 10/0525, B23K 1/19, H01M 2/08, H01M 10/0569, B23K 101/36, B23K 103/10, C03C 3/19, C03C 4/20, C03C 8/24, H01M 2/06

(54) **GLAS, INSBESONDERE GLASLOT BEZIEHUNGSWEISE SCHMELZGLAS**
GLASS, IN PARTICULAR GLASS SOLDER OR FUSIBLE GLASS
VERRE, EN PARTICULIER VERRE DE SOUDURE OU VERRE FONDU

(30) Priorität: 18.02.2011 DE 102011011705; 25.02.2011 DE 102011012430; 01.04.2011 DE 102011015869; 10.06.2011 DE 102011103975; 10.06.2011 DE 102011103976; 07.07.2011 DE 102011106873
(43) Veröffentlichungstag der Anmeldung: 25.12.2013
(73) Patentinhaber: Schott AG, 55122 Mainz (DE)
(72) Erfinder: GOEDEKE, Dieter, 65812 Bad Soden (DE); BACKNAES, Linda, 84036 Landshut (DE)
(74) Vertreter: Sawodny, Michael-Wolfgang
(86) Internationale Anmeldenummer: PCT/EP2012/000703
(87) Internationale Veröffentlichungsnummer: WO 2012/110247

(56) Entgegenhaltungen:
- US-A1- 2003 134 194
- DATABASE WPI Week 198431 7. Dezember 1983 (1983-12-07) Thomson Scientific, London, GB; AN 1984-194386 XP002677543, -& SU 1 058 909 A1 (KOSTANYAN K A) 7. Dezember 1983 (1983-12-07)

## Beschreibung

Die Erfindung betrifft ein Glas und damit eine Glaszusammensetzung, insbesondere ein Glaslot sowie eine Durchführung für eine Speichereinrichtung, bevorzugt eine Lithium-Ionen-Batterie, bevorzugt ein Lithium-Ionen Akkumulator mit einem derartigen Glas.

Glaslote oder Schmelzgläser sind Gläser, die dazu verwandt werden, Metalle mit einer hohen Wärmeausdehnung und niedrigen Schmelztemperaturen miteinander zu verbinden, beispielsweise durch Verlöten mittels eines Glaslotes bzw. Verschmelzen mittels eines Schmelzglases.

Gläser, die als Glaslote eingesetzt werden können, sind aus einer Vielzahl von Patentschriften bekannt geworden.

So beschreibt die US 5,262,364 ein hochdehnendes Glaslot, umfassend 10-25 mol-% Na₂O, 10-25 mol-% K₂O, 5-15 mol-% Al₂O₃, 35-50 mol-% P₂O₅, 5-15 mol-% PbO und/oder BaO. Das in der US 5,262,364 offenbarte Glaslot hat eine Wärmeausdehnung α im Bereich von 16x10⁻⁶/K bis 21x10⁻⁶/K. Nachteilig an dem Lot gemäß der US 5,262,364 war unter anderem, dass das Glaslot Blei, das heißt PbO enthielt sowie einen relativ hohen Anteil an Na₂O.

Aus der US 5,965,469 ist ein bleifreies hoch ausdehnendes Glaslot bzw. Schmelzglas für Anwendungen in hermetischem Gehäuse für Hochfrequenzanwendungen gezeigt. Das aus der 5,965,469 bekannte bleifreie hoch ausdehnende Glaslot umfasst 10-25 mol-% Na₂O, 10-25 mol-% K₂O, 4-15 mol-% Al₂O₃, 35-50 mol-% P₂O₅, 0-10 mol-% B₂O₃ und einen Gehalt von MₓO, der nicht 12 mol-% überschreitet, wobei Mₓ Kalzium (Ca) oder Magnesium (Mg) sein kann. Obwohl diese Gläser wenig oder gar kein Blei enthalten, weisen sie doch sehr hohe Gehalte an Alkalien auf.

Phosphatlotgläser für das Fügen von Metall und Glas beziehungsweise Glaskeramik sind in US 4,455,384 beschrieben. Derartige Phosphatlotgläser sind in der Regel chemisch resistent und vakuumdicht. Phosphatlotgläser in anderen Anwendungsgebieten, beispielsweise in optischen Anwendungen sind vielfach beschrieben, beispielsweise in der DE 1596854, der JP 90188442 A sowie der JP91218941 A.

Durchführungen mit thermisch sich sehr stark ausdehnenden Materialien wie Aluminium, Aluminiumlegierungen, Kupfer und Kupferlegierungen und Glasmaterialien sind lediglich im Bereich von Hochfrequenzdurchführungen (HF-Durchführung) bekannt geworden. Derartige HF-Durchführungen mit Glasmaterialien auf der Basis von Aluminium-Phosphat-Gläsern sind beispielsweise aus der US 5,262,364, der US 5,965,469 sowie der US 6,037,539 bekannt geworden.

Insbesondere die US 6,037,539 zeigt eine HF-Durchführung, bei der ein eisenhaltiger bzw. ein nicht eisenhaltiger Leiter in einer Aluminium-PhosphatglasZusammensetzung durch ein Gehäuseteil, umfassend Aluminium, hindurchgeführt wird. Die aus der US 6,037,539 bekannte HF-Durchführung ist im Wesentlichen auf den Einsatzzweck optimiert. Bevorzugt werden mit derartigen Durchführungen Frequenzen zwischen 8 und 1000 MHz übertragen. Auch die Hochspannungsanwendung ist in der US 6,037,539 beschrieben. Nicht jedoch sind in der US 6,037,539 Batteriedurchführungen beschrieben.

Als Batterie im Sinne der Erfindung wird sowohl eine Einwegbatterie, die nach ihrer Entladung entsorgt und/oder recycelt wird, als auch ein Akkumulator verstanden

Als Material, bevorzugt für die Gehäuse und Durchführungen bei Lithium-Ionen-Akkumulatoren werden Leichtmetall, insbesondere Aluminium, AlSiC, Aluminiumlegierungen, Magnesium, Magnesiumlegierungen, Titan oder Titanlegierungen diskutiert.

Lithium-Ionen-Akkumulatoren sind für verschiedene Anwendungen vorgesehen, wie beispielsweise tragbare elektronische Geräte, Mobiltelefone, Motorwerkzeuge sowie insbesondere Elektrofahrzeuge. Die Batterien können traditionelle Energiequellen wie beispielsweise Blei-Säure-Batterien, Nickel-Cadmium-Batterien oder Nickel-Metallhydrid-Batterien ersetzen.

Lithium-Ionen-Batterien sind seit vielen Jahren bekannt. Diesbezüglich wird beispielsweise auf "Handbook of Batteries, David Linden, Herausgeber, 2. Auflage, McGrawhill, 1995, Kapitel 36 und 39" verwiesen.

Verschiedene Aspekte von Lithium-Ionen-Akkumulatoren sind in einer Vielzahl von Patenten beschrieben. Beispielsweise seien genannt US 961,672, US 5,952,126, US 5,900,183, US 5,874,185, US 5,849,434, US 5,853,914 sowie US 5,773,959.

Insbesondere für die Anwendung im Bereich von Speichereinrichtungen, bevorzugt Lithium-Ionen-Akkumulatoren in der Automobil-Umgebung müssen eine Vielzahl von Problemen wie Korrosionsbeständigkeit, Beständigkeit bei Unfall oder Schwingungsfestigkeit gelöst werden. Ein weiteres Problem ist die hermetische Dichtheit der Batterie, insbesondere der Lithium-Ionen-Batterie über einen langen Zeitraum. Die Dichtheit beeinträchtigen können z. B. Undichtigkeit im Bereich der Elektroden der Batterie beziehungsweise der Elektrodendurchführung der Batterie, ein Batteriekurzschluss oder Temperaturänderungen, die zu einer verminderten Batterielebensdauer führen. Ein weiteres Problem von Batteriedurchführungen ist die Instabilität gegenüber aggressiven Batterieelektrolyten, insbesondere gegenüber nicht wässrigen Elektrolyten, wie sie beispielsweise in Lithium-Ionen-Akkumulatoren Verwendung finden.

Um eine bessere Beständigkeit bei Unfall sicherzustellen, schlägt die DE 101 05 877 A1 beispielsweise ein Gehäuse für eine Lithium-Ionen-Batterie vor, wobei das Gehäuse einen Metallmantel umfasst, der auf beiden Seiten offen ist und verschlossen wird. Der Stromanschluss ist durch einen Kunststoff isoliert. Nachteilig an den Kunststoffisolierungen ist die limitierte Temperaturbeständigkeit, die unsichere Dichtheit über der Lebensdauer und die geringe chemische Beständigkeit gegenüber den Batterieelektrolyten.

Aus der US 2003/134194A1 ist eine Durchführung für Li-Ionen Bakterien bekannt geworden, bei der eine Einglasung in Aluminium mit dem Glas ALSG 32, einem Phosphatglas umfassend 6 mol-% B₂O₃, 40 mol-% P₂O₅, 15 mol-% Na₂O, 18 mol-% K₂O, 9 mol-% PbO und 12 mol-% Al₂O₃ vorgenommen wird. Nachteilig am ALSG 32-Glas der US 2003/134 194 A1 ist der hohe Bleianteil.

Aus der SU 1058909 A ist ein Phosphatglas mit 54 - 63,5mol-% P₂O₅, 1 - 6mol-%Al₂O₃, 5 - 15,0mol-% B₂O₃, 3,0 - 9,0mol-% Na₂O, 2,5 - 5,5mol-% Li₂O, 0,3 - 1,0mol-%CuO, 9,0 - 14,0mol-% BaO, 3,0 - 7,0 mol-% K₂O, 0,1 - 3,0mol-% ZrO₂ und 0,1 - 0,5mol-%NiO bekannt geworden. Dieses Glas zeichnet sich dadurch aus, dass es als Dichtungsglas für Al, Cu, Messing und Metalllegierungen eingesetzt werden kann.

Aufgabe der Erfindung ist es, ein Glas, insbesondere ein Glaslot bzw. ein Schmelzglas bereitzustellen, das die Probleme des Standes der Technik vermeidet.

Insbesondere soll ein Glas angegeben werden, das als Fügeglas, d.h. als Lotglas bzw. Schmelzglas für eine Durchführung, beispielsweise eine hermetische Durchführung insbesondere für eine Speichereinrichtung mit einem Elektrolyten, bevorzugt einem aggressiven Elektrolyten, wie er in Lithium-Ionen-Batterien verwandt wird, eingesetzt werden kann.

Erfindungsgemäß wird dies durch ein Glas gemäß Anspruch 1 sowie eine Durchführung, insbesondere für eine Speichereinrichtung gemäß Anspruch 12 und eine Speichereinrichtung gemäß Anspruch 13 gelöst.

Vorteilhafte Weiterbildungen der Erfindung sind Gegenstand der Unteransprüche. Das erfindungsgemäße Glas, insbesondere Glaslot bzw. Schmelzglas, umfasst die nachfolgenden Komponenten in mol-%:

| | |
|---|---|
| P₂O₅ | 37-50 mol-%, insbesondere 39-48 mol-% |
| Al₂O₃ | 0-14 mol-%, insbesondere 2-12 mol-% |
| B₂O₃ | 2-10 mol-%, insbesondere 4-8 mol-% |
| Na₂O | 0-30 mol-%, insbesondere 0-20 mol-% |
| M₂O | 0-20 mol-%, insbesondere 12-19 mol-%, wobei M=K, Cs, Rb sein kann, |
| Li₂O | 0-45 mol-%, insbesondere 0-40 mol-%, bevorzugt 17-40 mol-% |
| BaO | 0-20 mol-%, insbesondere 0-20 mol-%, bevorzugt 5-20 mol-% |
| Bi₂O₃ | -10 mol-%, bevorzugt 1-5 mol-%, am bevorzugtesten 2-5 mol-% |

Weitere Bestandteile sind optional möglich und ebenfalls von der Erfindung erfasst. Erfindungsgemäßt ist die Glaszusammensetzung bis auf Verunreinigungen frei von Blei, d. h. PbO kann identisch zu 0 mol-% in der Glaszusammensetzung gesetzt werden. Frei von Blei bedeutet in vorliegender Anmeldung, dass weniger als 100 ppm, bevorzugt weniger als 10 ppm, ganz bevorzugt weniger als 1 ppm Blei-Verunreinigung enthalten ist.

Bei den erfindungsgemäßen Glaszusammensetzungen handelt es sich in der Regel um stabile Phosphatgläser, die einen deutlich niedrigeren Gesamtalkaligehalt als aus dem Stand der Technik bekannte Alkali-Phosphatgläser aufweisen.

Überraschenderweise hat sich gezeigt, dass die erfindungsgemäße Glaszusammensetzung mit einem Li-Anteil von bis zu 45 mol-%, insbesondere bis zu 35 mol-%, kristallisationsstabil ist, d.h. in einem nachgeschalteten Sinterschritt keine störende Kristallisation zeigt. Bei einem Li-Anteil von bis zu 35 mol-% wird sogar keine wesentliche Kristallisation mehr festgestellt. Durch die hohe Kristallisationsstabilität der Phosphatgläser wird sichergestellt, dass das Aufschmelzen der Gläser in der Regel auch bei Temperaturen < 600° C nicht behindert wird. Dies ermöglicht es, die erfindungsgemäße Glaszusammensetzung als Glaslot zu verwenden, da das Aufschmelzen der Glaszusammensetzungen auch bei Temperaturen in der Regel < 600° C nicht behindert wird.

Das erfindungsgemäße Glas weist eine Wärmeausdehnung α im Bereich 20° C bis 300° C > 14 · 10⁻⁶/K und eine niedrige Löttemperatur bzw. Verschmelztemperatur auf. Die Löttemperatur bzw. Verschmelztemperatur des Glases ist überraschenderweise geringer als die Schmelztemperatur der Metalle Al (660° C), Cu (1084°C), Edelstahl (> 1400° C), und die thermische Ausdehnung α (20° C bis 300° C) liegt in der Größenordnung von α (20° C bis 300° C) gängiger Metalle wie Al (α=23·10⁻⁶/K), Cu (α=16.5·10⁻⁶/K), Edelstahl (α=17·10⁻⁶/K). Des Weiteren zeigen die erfindungsgemäßen Gläser eine hohe Beständigkeit gegenüber insbesondere nicht-wässrigen Elektrolyten wie beispielsweise LiPF₆, insbesondere 1 MLiPF₆ in Eythylenkarbonat: Dimethylkarbonat 1:1 sowie eine hohe Beständigkeit gegenüber Wasser sowie gegenüber HF. Daher eignen sich die erfindungsgemäßen Gläser insbesondere zur Herstellung hermetischer Durchführungen für Gehäuse von Speicherzellen bzw. Speichereinrichtungen, insbesondere Li-Ionen-Speichereinrichtungen.

Ein Vorteil der erfindungsgemäßen Glaszusammensetzungen ist, dass Li in die Glasstruktur eingebaut ist. Da Li in dem Elektrolyten, wie er für Li-Ionen-Speichereinrichtungen verwandt wird, enthalten ist, sollte die Batterieleistung nicht beeinträchtigt werden. Des Weiteren weist die Glaszusammensetzung eine hohe Wärmeausdehnung α im Bereich 20° C bis 300° C und eine Löttemperatur unterhalb des Schmelzpunktes für die zu lötenden bzw. zu verschmelzenden Metalle auf, wie oben beschrieben.

Da die Diffusion der Alkali-Ionen in der Reihenfolge Na+ >K+>Cs+ erfolgt, sind natriumarme bzw. natriumfreie Gläser besonders beständig gegenüber Elektrolyten, insbesondere solchen, wie in Li-Ionen-Speichereinrichtungen verwandt.

In einer bevorzugten Ausführungsform umfasst die Glaszusammensetzung wenigstens 17 mol-% Li₂O und höchstens 35 mol-% Li₂O. Derartige Glaszusammensetzungen sind sowohl ausreichend beständig gegenüber Elektrolyten, die Li enthalten, als auch ausreichend kristallisationsstabil, wodurch ein Aufschmelzen der Gläser bei Temperaturen in der Regel < 600° C nicht behindert wird.

In einer besonders bevorzugten Glaszusammensetzung umfasst diese 4-8 mol-% Bi₂O₃. Bi₂O₃ kann insbesondere das umweltschädliche PbO ersetzen. Des Weiteren kann durch den Zusatz von Bi₂O₃ die Wasserbeständigkeit deutlich erhöht werden. Insbesondere kann durch nur einen geringen Zusatz von 1 mol.-% Bi₂O₃ bereits eine Alkali-Phosphatglaszusammensetzung mit im wesentlichen gleichem Alkaligehalt überraschenderweise ungefähr 10-fach wasserbeständiger gemacht werden als eine Alkali-Phosphatglaszusammensetzung in dem kein Bi₂O₃ bis auf Verunreinigungen vorhanden ist. Dieser Effekt war für einen Fachmann überraschend.

Besonders bevorzugt sind aus Umweltgründen Gläser, die bis auf Verunreinigungen frei von Pb sind. Frei von Pb bis auf Verunreinigungen bedeutet in dieser Anmeldung, wie zuvor ausgeführt, dass das Glas eine Menge < 100 ppm, bevorzugt < 10 ppm, ganz bevorzugt < 1 ppm Blei umfasst.

Bevorzugt weist die Glaszusammensetzung einen Ausdehnungskoeffizienten α im Bereich 20° C bis 300° C im Bereich > 14 · 10⁻⁶/K, bevorzugt 15 · 10⁻⁶/K bis 25 · 10⁻⁶/K, insbesondere im Bereich 13 · 10⁻⁶/K bis 20 · 10⁻⁶/K auf. Glaszusammensetzungen mit derartigen Ausdehnungskoeffizienten bzw. α (20° C bis 300° C) sind an die Ausdehnungskoeffizienten gängiger Metalle wie Al (α=23·10⁻⁶/K), Cu (α=16.5·10⁻⁶/K), Edelstahl (α=17·10⁻⁶/K) angepasst. Wenn das Glas mit Leichtmetallen wie Aluminium verbindbar sein soll, ist es vorteilhaft, wenn die Glaszusammensetzung eine Aufschmelztemperatur < 600° C aufweist.

In einer besonders bevorzugten Ausführungsform weist die Glaszusammensetzung eine Halbkugeltemperatur im Bereich 500° C bis 650° C, insbesondere im Bereich 500° C bis 600° C auf.

Unter Verschmelztemperatur bzw. Verschmelzungstemperatur bzw. Lottemperatur des Glases oder der Glaskeramik wir diejenige Temperatur des Glases oder der Glaskeramik verstanden, bei der das Glasmaterial erweicht und so an dem mit dem Glasmaterial zu verschmelzenden Metall dicht anliegt, so dass eine Fügeverbindung zwischen dem Glas oder der Glaskeramik und dem Metall erhalten wird.

Die Verschmelztemperatur kann beispielsweise über die Halbkugeltemperatur wie in R. Görke, K.-J. Leers: Keram. Z. 48 (1996) 300-305 bzw. nach DIN 51730, ISO 540 oder CEN/TS 15404 und 15370-1 beschrieben, deren Offenbarungsgehalt vollumfänglich in vorliegende Anmeldung mit aufgenommen wird, bestimmt werden. Die Messung der Halbkugeltemperatur ist ausführlich in der DE 10 2009 011 182 A1, deren Offenbarungsgehalt vollumfänglich in vorliegende Anmeldung mit aufgenommen wird, erläutert. Gemäß der DE 10 2009 011 182 A1 kann die Halbkugeltemperatur in einem mikroskopischen Verfahren mit einem Heiztischmikroskop bestimmt werden. Sie kennzeichnet diejenige Temperatur, bei der ein ursprünglich zylindrischer Probekörper zu einer halbkugelförmigen Masse zusammengeschmolzen ist. Der Halbkugeltemperatur lässt sich eine Viskosität von ungefähr log η = 4,6 dPas zuordnen, wie entsprechender Fachliteratur entnommen werden kann. Wird ein kristallisationsfreies Glas, beispielsweise in Form eines Glaspulvers, aufgeschmolzen und wieder abgekühlt, so dass es erstarrt, kann es üblicherweise bei der gleichen Schmelztemperatur auch wieder aufgeschmolzen werden. Dies bedeutet für eine Fügeverbindung mit einem kristallisationsfreien Glas, dass die Betriebstemperatur, welcher die Fügeverbindung dauerhaft ausgesetzt sein kann, nicht höher als die Verschmelztemperatur sein darf. Glaszusammensetzungen, wie sie vorliegend eingesetzt werden, werden im Allgemeinen oftmals aus einem Glaspulver hergestellt, das aufgeschmolzen wird und unter Wärmeeinwirkung mit den zu verbindenden Bauteilen die Fügeverbindung ergibt. Die Verschmelztemperatur bzw. Schmelztemperatur entspricht in der Regel etwa der Höhe der sogenannten Halbkugeltemperatur des Glases. Gläser mit niedrigen Verschmelztemperaturen bzw. Schmelztemperatur werden auch als Glaslote bezeichnet. Anstelle von Verschmelz- oder Schmelztemperatur wird in einem solchen Fall von Lottemperatur bzw. Löttemperatur geredet. Die Verschmelztemperatur bzw. Lottemperatur kann um ± 20 K von der Halbkugeltemperatur abweichen.

Besonders bevorzugt ist es, wenn das Glas eine derartige Zusammensetzung aufweist, dass das Glas unter Normalatmosphäre mit Al und/oder Cu verlötbar bzw. verschmelzbar ist. Dann lassen sich alle Al-Al bzw. Al-Cu-Verbindungen mit den genannten Gläsern verlöten bzw. verbinden. Besonders eignen sich die erfindungsgemäßen Gläser für den Kontakt mit aggressiven fluorhaltigen Medien. Derartige fluorhaltige Medien finden beispielsweise als Elektrolyten in Li-Ionen-Batterien Verwendung.

In einer besonders bevorzugten Ausführungsform weist das Glas bzw. die Glaszusammensetzung eine hohe chemische Beständigkeit gegenüber nicht wässrigen Batterieelektrolyten, insbesondere gegenüber Carbonaten, bevorzugt Carbonatmischungen mit einem Leitsalz, bevorzugt umfassend LiPF₆ auf. Neben dem Glas bzw. der Glaszusammensetzung gibt die Erfindung auch eine Durchführung, insbesondere für eine Speichereinrichtung, bevorzugt eine Lithium-Ionen-Batterie, bevorzugt ein Lithium-Ionen-Akkumulator mit einer erfindungsgemäßen Glaszusammensetzung an.

Des Weiteren wird eine Li-Ionen-Batterie mit einer derartigen Durchführung zur Verfügung gestellt. Obwohl hier für Batteriedurchführungen beschrieben ist die Erfindung hierauf nicht beschränkt. Die Glaszusammensetzungen können bei Durchführung jedweder Art eingesetzt werden, insbesondere aber solchen, bei denen der Grundkörper und/oder das Gehäuse und optional auch der Leiter ein Leichtmetall, insbesonders Aluminium ist. Denkbare Durchführungen sind Durchführungen beispielsweise für Bauteile, insbesondere Elektronikbauteile, die im Leichtbau, beispielsweise im Flugzeugbau in der Raumfahrt Verwendung finden, und die insbesondere eine ausreichende Temperaturbeständigkeit aufweisen müssen. Elektronikbauteile können beispielsweise Sensoren und/oder Aktuatoren sein.

Durchführungen, insbesondere Batteriedurchführungen, insbesondere für eine Lithium-Ionen-Batterie, bevorzugt für einen Lithium-Ionen-Akkumulator, weisen einen Grundkörper auf, wobei der Grundkörper wenigstens eine Öffnung aufweist, durch die ein Leiter, insbesondere ein im Wesentlichen stiftförmiger Leiter in einem Glasmaterial mit erfindungsgemäßer Zusammensetzung hindurchgeführt wird, wobei der Grundkörper bevorzugt ein niedrig schmelzendes Material, insbesondere ein Leichtmetall, bevorzugt Aluminium, AlSiC, Magnesium oder Titan umfasst. Auch Legierungen, insbesondere Leichtmetalllegierungen wie Aluminiumlegierungen, Magnesiumlegierungen oder Titanlegierungen, beispielsweise Ti6246 oder Ti6242 sind denkbar. Titan ist ein körperverträgliches Material, so dass es für medizinische Anwendungen, beispielsweise in der Prothetik, zum Einsatz kommt. Ebenso wird es wegen der besonderen Festigkeit, Beständigkeit und geringem Gewicht in besonderen Anwendungen gerne verwendet, beispielsweise im Rennsport, aber auch für Luft- und Raumfahrtanwendungen.

Weitere Materialien für den Grundkörper und/oder das Gehäuse, insbesondere Batteriegehäuse, sind Metalle, insbesondere Stahl, nicht rostender Stahl, Edelstahl oder Werkzeugstahl, der für eine spätere Wärmebehandlung vorgesehen ist. Verwendbar als
Edelstähle sind beispielsweise X12CrMoS17, X5CrNi1810, XCrNiS189, X2CrNi1911, X12CrNi177, X5CrNiMo17-12-2, X6CrNiMoTi17-12-2, X6CrNiTi1810 und X15CrNiSi25-20, X10CrNi1808, X2CrNiMo17-12-2, X6CrNiMoTi17-12-2. Um eine besonders gute Verschweißbarkeit sowohl beim Laserschweißen wie auch beim Widerstandsschweißen zur Verfügung stellen zu können, als Material für den Grundkörper und/oder das Gehäuseteil, insbesondere das Batteriezellengehäuse, ganz besonders Edelstähle, insbesondere Cr-Ni-Stähle mit den Werkstoff-Nummern (WNr.) gemäß Euro-Norm (EN) 1.4301, 1.4302, 1.4303, 1.4304, 1.4305, 1.4306, 1.4307 verwandt. Als Normalstahl kann St35, St37 oder St38 verwandt werden.

Um zu verhindern, dass beim Einglasen das Leichtmetall des Grundkörpers und eventuell auch des Metallstiftes schmilzt oder deformiert, liegt die Verschmelztemperatur des Glasmaterials mit dem Material des Grundkörpers und/oder Leiters unterhalb der Schmelztemperatur des Materials des Grundkörpers bzw. Leiters. Die Verschmelztemperatur der angegebenen Glaszusammensetzungen liegen unterhalb 650° C, insbesondere im Bereich von 350° C bis 650° C. Die Verschmelztemperatur kann beispielsweise über die Halbkugeltemperatur wie in R. Görke, K.-J. Leers: Keram. Z. 48 (1996) 300-305, bzw. nach DIN 51730, ISO 540 oder CEN/TS 15404 und 15370-1 beschrieben, deren Offenbarungsgehalt vollumfänglich in vorliegende Anmeldung mit aufgenommen wird, bestimmt werden.

Das Einglasen des Leiters in die Öffnung kann dann wie folgt durchgeführt werden:
Zunächst wird das Glasmaterial der erfindungsgemäßen Zusammensetzung zusammen mit dem stiftförmigen Leiter in die Öffnung im Grundkörper eingebracht. Sodann wird das Glas zusammen mit dem Leiter, insbesondere dem stiftförmigen Leiter auf die Verschmelztemperatur bzw. Halbkugeltemperatur des Glases erwärmt, so dass das Glasmaterial erweicht und in der Öffnung den Leiter, insbesondere den stiftförmigen Leiter umschließt und am Grundkörper anliegt. Da die Schmelztemperatur sowohl des Materials des Grundkörpers als auch des Leiters, insbesondere des stiftförmigen Leiters oberhalb der Verschmelztemperatur des Glasmaterials liegt, liegt der Grundkörper wie auch der stiftförmige Leiter im festen Zustand vor. Bevorzugt liegt die Verschmelztemperatur des Glasmaterials 20 bis 150 K unterhalb der Schmelztemperatur des Materials des Grundkörpers bzw. stiftförmigen Leiters. Wird beispielsweise Aluminium als Leichtmetall mit einem Schmelzpunkt von T_{SCHMELZ} = 660,32° C verwendet, so liegt die Verschmelztemperatur des Glasmaterials im Bereich 350° C bis 640° C, bevorzugt im Bereich 350° C bis 600° C besonders bevorzugt im Bereich 350°C bis < 550°C, insbesondere im Bereich 450°C bis < 550°C. Alternativ zu einem Leichtmetall wie Aluminium, einer Aluminiumlegierung, Magnesium, einer Magnesiumlegierung, Titan, einer Titanlegierung könnte als Material für den Grundkörper auch eine SiC Matrix eingesetzt werden, die mit Al infiltriert ist. Ein derartiges Material wird auch als AlSiC bezeichnet. AlSiC weist einen SiC-Kern auf, in den Al eindiffundiert ist. Durch den Anteil des Al können die Eigenschaften, insbesondere der Ausdehnungskoeffizient, eingestellt werden. Insbesondere hat AlSiC eine niedrigere Wärmeausdehnung als reines Aluminium.

In vorliegender Anmeldung werden unter Leichtmetallen Metalle verstanden, die ein spezifisches Gewicht geringer als 5,0 kg/dm³ aufweisen. Insbesondere liegt das spezifische Gewicht der Leichtmetalle im Bereich 1,0 kg/dm³ bis 3,0 kg/dm³.

Werden die Leichtmetalle zudem als Materialien für die Leiter, beispielsweise dem stiftförmigen Leiter oder das Elektrodenverbindungsbauteil verwandt, so zeichnen sich die Leichtmetalle des Weiteren noch durch eine spezifische elektrische Leitfähigkeit im Bereich 5 · 10⁶ S/m bis 50 · 10⁶ S/m aus.

Andere Materialien wären Stahl, nicht rostender Stahl oder Edelstahl.

Das Material des Leiters, insbesondere des stiftförmigen Leiters, kann identisch zum Material des Grundkörpers sein, also beispielsweise Aluminium oder AlSiC. Dies hat den Vorteil, dass der Ausdehnungskoeffizient von Grundkörper und Metallstift identisch ist. Der Ausdehnungskoeffizient α des Glas- oder Glaskeramikmaterials muss dann nur an ein Material angepasst werden. Des weiteren kann der Außenleiter die Materialien Edelstahl oder Stahl umfassen.

Alternativ hierzu kann der Leiter, insbesondere der stiftförmige Leiter, Cu, CuSiC oder Kupferlegierungen, Mg oder Magnesiumlegierungen, Gold oder Goldlegierungen, Silber oder Silberlegierungen, NiFe, ein NiFe-Mantel mit Kupferinnenteil sowie eine Kobald-Eisen-Legierung umfassen.

Als Aluminium bzw. Aluminiumlegierung insbesondere für den Leiter finden bevorzugt Verwendung:
EN AW-1050 A
EN AW-1350
EN AW-2014
EN AW-3003
EN AW-4032
EN AW-5019
EN AW-5056
EN AW-5083
EN AW-5556A
EN AW-6060
EN AW-6061.

Als Kupfer bzw. Kupferlegierungen insbesondere für den Leiter finden bevorzugt Verwendung:
Cu-PHC 2.0070
Cu-OF 2.0070
Cu-ETP 2.0065
Cu-HCP 2.0070
Cu-DHP 2.0090

Im Fall, dass der Grundkörper und der Metallstift unterschiedliche Materialien aufweist, gilt beispielsweise α_{Grundkörper} ≥ α_{Glas} ≥ α_{Metallstift}.

Weichen die thermischen Ausdehnungen der Komponenten voneinander ab, wie zuvor beschrieben, so handelt es sich um eine Druckglasdurchführung bzw. Druckeinglasungen als Spezialeinglasungen.Hier führt die unterschiedliche thermische Ausdehnung von Glas- oder Glaskeramikmaterial und umgebendem Metall zu einer kraftschlüssigen bzw. reibschlüssigen Verbindung von Glas- oder Glaskeramikmaterial und umgebendem Metall. Angewandt werden derartige Druckglasdurchführungen beispielsweise bei Durchführungen für Airbag-Zünder. Bei Druckglasdurchführungen haftet zwar das Glas- oder Glaskeramikmaterial an dem umgebenden Metall an, es besteht jedoch keine molekulare Verbindung zwischen dem Glas- oder Glaskeramikmaterial und dem Metall. Der Kraftschluss geht verloren, sobald die durch die Haftreibung bewirkte Gegenkraft überschritten wird. Eine chemische Bindung von Glas- oder Glaskeramikmaterial kann erreicht werden, wenn die Oberflächen behandelt werden oder das Glasmaterial mit dem umgebenden Metall mit einer Schweißverbindung, insbesondere einer Ultraschweißverbindung verbunden wird.

Durchführungen, insbesondere Batteriedurchführungen mit erfindungsgemäßer Glaszusammensetzung zeichnen sich dadurch aus, dass eine Einglasung in einen niedrig schmelzenden Grundkörper möglich ist und eine ausreichende Beständigkeit beispielsweise gegenüber einem Batterieelektrolyten gegeben ist. Die Einglasung kann sowohl eine Druckeinglasung als auch eine angepasste Einglasung sein. Bei einer angepassten Einglasung sind die Ausdehnungskoeffizienten α (20°C - 300°C) von Glas und umgebende bzw. einzuglasende Materialien im Wesentlichen gleich.

Insbesondere ist bei den Gläsern eine ausreichende chemische Stabilität gegenüber nicht wässrigen, in der Regel aggressiven Batterie-Elektrolyten, gegeben. Nicht wässrige Batterie-Elektrolyten bestehen typischerweise aus einem Carbonat, insbesondere aus einer Carbonatmischung, wie beispielsweise eine Mischung aus Ethylencarbonat oder Dimethylcarbonat, wobei die aggressiven, nicht wässrigen Batterie-Elektrolyten ein Leitsalz aufweisen, beispielsweise das Leitsalz LiPF₆, z. B. in Form einer 1 molaren Lösung.

Die Beständigkeit der erfindungsgemäßen Gläser gegenüber den Batterie-Elektrolyten kann dadurch geprüft werden, dass die Glaszusammensetzung in Form eines Glaspulvers mit einer Körnung d50 = 10 µm gemahlen wird und in den Elektrolyten für eine vorbestimmte Zeit, beispielsweise eine Woche, ausgelagert wird. d50 bedeutet, dass 50 % aller Partikel oder Körner des Glaspulvers kleiner oder gleich einem Durchmesser von 10 µm ist. Als nicht wässriger Elektrolyt wird beispielsweise eine Carbonatmischung aus Ethylencarbonat und Dimethylcarbonat im Verhältnis 1:1 mit einem molaren LiPF₆ als Leitsalz verwandt. Nachdem das Glaspulver dem Elektrolyten ausgesetzt war, kann das Glaspulver abfiltriert und der Elektrolyt auf Glasbestandteile, die aus dem Glas ausgelaugt wurden, untersucht werden. Hierbei hat sich herausgestellt, dass bei den verwandten Gläsern gemäß der Erfindung in den beanspruchten Zusammensetzungsbereichen überraschenderweise eine derartige Auslaugung in nur geringem Maß von weniger als 20 Massenprozent vorliegt, in besonderen Fällen auch eine Auslaugung < 5 Massenprozent erreicht wird bei einer thermischen Ausdehnung α (20°C - 300°C) zwischen 15 · 10⁻⁶/Kund 25 · 10⁻⁶/K. Ein weiterer Vorteil der erfindungsgemäßen Glaszusammensetzung, die bei einer Batteriedurchführung mit einem oder mehreren Stiften aus Aluminium Verwendung finden können, ist darin zu sehen, dass eine Verschmelzung des Glases mit dem umgebenden Leichtmetall bzw. dem Metall des Leiters, insbesondere in Form eines Metallstiftes, auch unter einer Gasatmosphäre, die keine Schutzgasatmosphäre ist, möglich ist. Auch ein Vakuum ist für Al-Verschmelzungen entgegen dem bisherigen Verfahren nicht notwendig. Vielmehr kann eine derartige Verschmelzung auch unter Luft erfolgen Für beide Arten der Verschmelzungen kann als Schutzgas N₂ oder Ar benutzt werden. Als Vorbehandlung zum Verschmelzen wird das Metall gereinigt und oder geätzt, wenn nötig gezielt oxidiert oder beschichtet. Während des Prozesses werden Temperaturen zwischen 300 und 600 °C mit Heizraten von 0.1 bis 30 K/Min und mit Haltezeiten von 1 bis 60 min verwandt.

Die erfindungsgemäßen Gläser zeigen überraschenderweise gleichzeitig eine hohe chemische Stabilität gegenüber dem bevorzugt nicht wässrigen Elektrolyten sowie einen hohen thermischen Ausdehnungskoeffizienten. Dies ist insbesondere deswegen überraschend, da angenommen wird, dass, je höher der thermische Ausdehnungskoeffizient ist, umso instabiler das Glas wird. Es ist daher überraschend, dass trotz des hohen Ausdehnungskoeffizienten und der niedrigen Verschmelztemperatur die erfindungsgemäßen Gläser eine ausreichende Stabilität aufweisen.

Die angegebene erfindungsgemäße Glaszusammensetzung kann zur Dehnungsanpassung, d.h. zur Anpassung des Ausdehnungskoeffizienten, noch mit Füllstoffen versehen sein.

Um die Glaszusammensetzung einer IR-Erwärmung zugänglich zu machen, können die vorgenannten Gläser mit Dotierstoffen versehen werden, die ein Emissionsmaximum im Bereich von Infrarot-Strahlung, insbesondere IR-Strahlung einer IR-Quelle aufweisen. Beispielhafte Materialien hierfür sind Fe, Cr, Mn, Co, V, Pigmente. Durch die Infrarot-Strahlung kann das so aufbereitete Glasmaterial örtlich gezielt erwärmt werden.

Des Weiteren zeichnet sich die Durchführung, insbesondere Batteriedurchführung mit den erfindungsgemäßen Gläsern gegenüber Durchführungen im Stand der Technik, insbesondere denjenigen mit Kunststoff als Dichtmaterial durch eine hohe Temperaturbeständigkeit, insbesondere Temperaturwechselbeständigkeit aus. Eine hermetische Dichtheit wird auch bei Temperaturänderung beziehungsweise bei Wechseln der Temperatur zur Verfügung gestellt, die verhindert. Die hermetische Dichtheit stellt sicher, dass keine Flüssigkeit insbesondere Batterieflüssigkeit austreten kann und/oder Feuchtigkeit in das Gehäuse eindringt. Unter hermetischer Dichtheit wird verstanden, dass bei einem Druckunterschied von 1bar die Helium-Leckrate <1·10⁻⁸ mbar Is⁻¹, bevorzugt <1.10⁻⁹ mbar Is⁻¹ liegt.

Des Weiteren weist die Durchführung, insbesondere die Batteriedurchführung eine ausreichende chemische Beständigkeit, insbesondere gegenüber nicht-wässrigen Batterie-Elektrolyten, auf.

Verwandt werden können die Durchführungen mit der erfindungsgemäßen Glaszusammensetzung bzw. den Gläsern in elektrischen Einrichtungen, insbesondere Speichereinrichtung, insbesondere einer Batterie, bevorzugt einer Batteriezelle. Das Gehäuse der Batteriezelle besteht bevorzugt aus dem gleichen Material wie der Grundkörper der Durchführung, insbesondere einem Leichtmetall. Der Grundkörper ist bei Batteriezellen bevorzugt Teil des Batteriegehäuses. Bevorzugt handelt es sich bei der Batterie um eine Lithium-Ionen-Batterie.

Die Batterie weist bevorzugt einen nicht-wässrigen Elektrolyten, insbesondere auf Carbonatbasis, bevorzugt eine Carbonatmischung, auf. Die Carbonatmischung kann ein Ethylencarbonat in Mischung mit Dimethylcarbonat mit einem Leitsalz, beispielsweise LiPF₆, umfassen.

Die Erfindung soll nachfolgend anhand der Figur und der Ausführungsbeispiele ohne Beschränkung hierauf beschrieben werden.

Es zeigen:

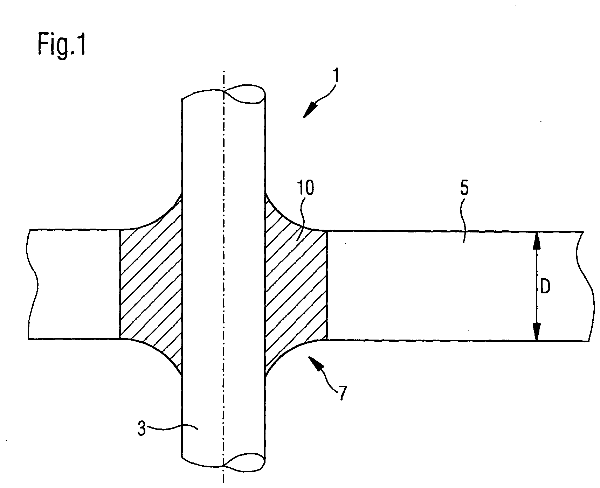

- Fig. 1: eine erfindungsgemäße Durchführung;

In Fig. 1 ist eine Durchführung 1 gemäß der Erfindung gezeigt. Die Durchführung 1 umfasst als Leiter insbesondere als stiftförmigen Leiter einen Metallstift 3, der bevorzugt aus einem Material, beispielsweise Aluminium oder Kupfer, besteht sowie als Grundkörper 5 ein Metallteil , das erfindungsgemäß aus einem niedrig schmelzenden Metall, d.h. einem Leichtmetall, insbesondere Aluminium, besteht. Der Metallstift 3 wird durch eine Öffnung 7, die durch das Metallteil 5 hindurchgeht, hindurchgeführt. Obwohl nur das Hindurchführen eines einzelnen Metallstiftes durch die Öffnung gezeigt ist, könnten auch mehrere Metallstifte durch die Öffnung hindurchgeführt werden, ohne dass von der Erfindung abgewichen wird.

Die Außenkontur der Öffnung 7 kann bevorzugt rund oder aber auch oval ausgebildet sein. Die Öffnung 7 geht durch die ganze Dicke D des Grundkörpers bzw. Metallteils 5 hindurch. Der Metallstift 1 ist in ein Glasmaterial 10 eingeglast und wird im Glasmaterial 10 durch die Öffnung 7 durch den Grundkörper 5 hindurchgeführt. In den Grundkörper 5 wird die Öffnung 7 durch beispielsweise einen Trennvorgang, bevorzugt Stanzen, eingebracht. Um eine hermetische Durchführung des Metallstiftes 3 durch die Öffnung 7 bereitzustellen, wird der Metallstift 3 in einem Glaspfropfen aus dem erfindungsgemäßen Glasmaterial eingeschmolzen. Ein wesentlicher Vorteil dieser Herstellungsweise besteht darin, dass auch unter erhöhten Belastungen auf den Glaspfropfen, z. B. bei einer Druckbelastung, ein Herausdrücken des Glaspfropfens mit Metallstift aus der Öffnung 7 vermieden wird. Die Verschmelztemperatur des erfindungsgemäßen Glasmaterials mit dem Grundkörper liegt 20 K bis 100 K unterhalb der Schmelztemperatur des Materials des Grundkörpers 5 und/oder des stiftförmigen Leiters.

Nachfolgend werden Ausführungsbeispiele(AB) für die erfindungsgemäße Glaszusammensetzungen sowie Beispiele (Bsp) für Glaszusammensetzungen, die nicht zur Erfindung gehören, angegeben. In den Schutzbereich des Anspruches fallen die Ausführungsbeispiele AB7, AB8, die einen Bi₂O₃-Anteil aufweisen. Die Bsp. 1-6 enthalten kein Bi₂O₃ und sind beispielhafte Zusammensetzungen, die nicht zur Erfindung gehören.

**Tabelle 1:**

| Ausführungsbeispiele: | | | | | | | | |
|---|---|---|---|---|---|---|---|---|
| | Bsp1 | Bsp2 | Bsp3 | Bsp4 | Bsp5 | Bsp6 | AB7 | AB8 |
| Mol-% | | | | | | | | |
| P₂O₅ | 47.6 | 43.3 | 43.3 | 43.3 | 37.1 | 40.0 | 42,0 | 46,5 |
| Al₂O₃ | 4.2 | 8.6 | 8.7 | 2.0 | 2 | 12.0 | 12,0 | 4,2 |
| B₂O₃ | 7.6 | 4.8 | 4.7 | 4.8 | 4.9 | 6.0 | 6,0 | 7,6 |
| Na₂O | 28.3 | 17.3 | | | | 15.0 | 16.0 | 28,3 |
| K₂O | 12.4 | 17.3 | 17.3 | | | 18.0 | 19.0 | 12,4 |
| PbO | | | | | | 9.0 | | |
| BaO | | 8.7 | 8.7 | 15.4 | 14 | | | |
| Li₂O | | | 17,3 | 34,6 | 42,1 | | | |
| Bi₂O₃ | | | | | | | 5 | 1 |
| Halbkugel Temperatur(°C) | 513 | 554 | 564 | 540 | 625 | | 553 | 502 |
| α_20-350° C (10⁻⁶ /K | 19 | 17,2 | 15,1 | 13,7 | 14,8 | 16.7 | 16,0 | 19,8 |
| Tg(°C) | 325 | 375 | 354 | 369 | 359 | 392 | 425 | 347 |
| Dichte [g/cm³] | 2,56 | | | | | 3 | 3 | |
| In Ma-% | 18,7 | | | | | 3,7 | 3,7 | |
| Gewichtsverlust(%) nach 70h in 70°C-Wasser | 10,7 | 0,37 | 0,1 | 0,13 | 0,13 | n.B. | 0,006/0,001 | 0.45/0,66 |

Neben den Auslaugungen wurden auch die Wasserbeständigkeiten der einzelnen Gläser bestimmt.

Die Wasserbeständigkeitstests sind so erfolgt, dass Niederschmelzungen von den Gläsern gemacht wurden (2x2 cm, Höhe: -0.5 cm), die in 200 ml Wasser bei 25° C und 70° C 70 Stunden eingelagert wurden. Danach wurde der Materialverlust in Gew.% bestimmt. Und in der Tabelle angegeben.

Beispiel 1 (Bsp1) in Tabelle 1 ist insbesondere für Aluminium/Aluminium-Einglasungen geeignet, d.h. Einglasungen eines Aluminiumstiftes als Leiter in einen umgebenden Aluminium-Grundkörper.

Obwohl einige der Ausführungsbeispiele einen für die Fügung mit Cu tendenziell zu niedrigen Ausdehnungskoeffizienten aufweisen, wird deutlich, dass hohe Li-Anteile in der Schmelze gelöst werden können, ohne dass das Glas mit einer derartigen Glaszusammensetzung instabil wird.

Die Ausführungsbeispiele AB7 und AB8 zeichnen sich dadurch aus, dass sie Bi₂O₃ z. B. anstelle von PbO, wie in Beispiel 6, enthalten.

Überraschenderweise hat sich gezeigt, dass durch Bi₂O₃ die Wasserbeständigkeit deutlich erhöht werden kann. Durch die Einführung von 1 mol-% Bi₂O₃ kann beispielsweise eine 10-fach höhere Wasserbeständigkeit als beim Beispiel Bsp1 erzielt werden. Bi₂O₃ kann insbesondere auch anstelle von PbO gemäß Beispiel 6 verwandt werden. Bevorzugte Glaszusammensetzungen gemäß der Erfindung, die sich durch besondere Umweltfreundlichkeit auszeichnen, sind frei von Blei, d. h. PbO bis auf Verunreinigungen. Dies sind beispielsweise die Ausführungsbeispiele AB7 und AB8.

Eine besonders kristallisationsstabile Glaszusammensetzung, die keine bzw. keine wesentliche Kristallisation zeigt, wird erreicht wenn der Lithiumgehalt geringer als 35 mol-%, insbesondere geringer als 20 mol-% ist. Dies sind beispielsweise die Ausführungsbeispiele AB7 und AB8, sowie die Beispiele Bsp1, Bsp2, Bsp3, Bsp4, Bsp6 Eine besondere Beständigkeit beispielsweise gegenüber Elektrolyten wird erreicht, wenn der Natriumgehalt geringer als 20 mol-% ist. Dies trifft insbesondere für natriumfreie Gläser, d. h. Gläser, die bis auf Verunreinigungen frei von Natrium sind, zu. Dies ist beispielsweise das Ausführungsbeispiel AB7, sowie die Beispiele Bsp2, Bsp3, Bsp4, Bsp5 und Bsp6.

Eine besonders hohe Wasserbeständigkeit wird erreicht, wenn gemäß der Erfindung wenigstens 1 mol-% Bi₂O₃, bevorzugt wenigstens 2 mol-% Bi₂O₃ in der Glaszusammensetzung vorhanden ist. Dies ist beispielsweise für die Ausführungsbeispiele AB7 und AB8 der Fall.

In der nachfolgenden Tabelle 2 sind herkömmliche Glaszusammensetzung (VB1-VB9) angegeben, die im Vergleich zu den zuvor genannten Beispielen Bsp.1 - Bsp. 6 und Ausführungsbeispielen AB7 bis AB8 in Tabelle 1 untersucht wurden.

In Tabelle 2, wie in Tabelle 1, ist die Zusammensetzung in mol-% angegeben, die Transformationstemperatur Tg, wie Sie beispielsweise in "Schott Guide to Glass, second edition, 1996, Chapman & Hall, Seiten 18-21 definiert ist, die Gesamtauslaugung in Massenprozent (Ma -%) angegeben, der Ausdehnungskoeffizient α in 10⁻⁶K⁻¹ im Bereich 20° C bis 300° C sowie die Dichte in g/cm³ Die Gesamtauslaugung wird wie im einleitenden Teil beschrieben bestimmt, d. h. die Glaszusammensetzungen wurden zu Glaspulver mit einer Körnung d50 = 10µm gemahlen, für eine Woche dem Elektrolyten bestehend aus Ethylencarbonat/Dimethylcarbonat im Verhältnis 1:1 mit darin gelöstem 1molaren LiPF₆ als Leitsalz ausgesetzt und nach dieser Zeit der Elektrolyt bestehend aus Ethylcarbonat/Dimethylcarbonat im Verhältnis 1:1 mit darin gelösten 1molaren LiPF₆ als Leitsalz auf Glasbestandteile, die aus dem Glas ausgelaugt wurden, untersucht. In Tabelle 1 bezeichnet n. b. nicht bekannte Eigenschaften.

**Tabelle 2:**

| Vergleichsbeispiele | | | | | | | | | | | | | |
|---|---|---|---|---|---|---|---|---|---|---|---|---|---|
| | | VB 1 | VB 2 | VB 3 | VB 4 | VB 5 | VB 6 | VB 7 | VB 8 | VB 9 | | | |
| System | | SiO2 | SiO2 | SiO2 | SiO2 | P2O5 | P2O5 | P2O5 | P2O5 | P2O5 | | | |
| | | | | | | | | | | | | | |
| Zusammensetzung [mol-%] | | | | | | | | | | | | | |
| SiO2 | | 66,5 | 66,6 | 63,3 | 77,8 | | 55,4 | | 2,6 | | | | |
| ZrO₂ | | | | 2,4 | | | 11,8 | | | | | | |
| Al₂O₃ | | 9,3 | 10,4 | 1,0 | 3,3 | 8,4 | 5,5 | 12,8 | 4,0 | 7,4 | | | |
| B₂O₃ | | 4,0 | 7,3 | 4,1 | 9,4 | | | 31,2 | 1,7 | | | | |
| MgO | | 4,0 | 4,4 | 3,3 | | 4,3 | 20,5 | | 2,9 | | | | |
| BaO | | 3,8 | 1,5 | 2,5 | 0,2 | 7,0 | | | 7,8 | | | | |
| La2O3 | | | | | | | 1,3 | | | | | | |
| Li₂O | | | | 0,6 | | | | | | | | | |
| K₂O | | | | 7,9 | | | 2,0 | | 2,4 | | | | |
| P₂O₅ | | | | | | 5,3 | 6,8 | 29,3 | 59,7 | 50,5 | | | |
| CaO | | 12,3 | 9,6 | 4,7 | 1,6 | 7,9 | | | 8,1 | | | | |
| Na₂O | | | | 9,1 | 7,0 | | | | 0,5 | | | | |
| SrO | | | | | | 11,3 | | | | | | | |
| F | | | | 1,0 | 0,6 | 54,7 | | | | | | | |
| PbO | | | | | | | | | | | | | |
| SnO | | | | | | | | 27,0 | | 42,2 | | | |
| ZnO | | | | | | | | | 8,9 | | | | |
| | | | | | | | | | | | | | |
| Tg | | 720 | 716 | 508 | 562 | 464 | 680 | n.b. | 462 | n.b. | | | |
| Gesamtauslaugung in Ma.-% | | 43,5 | 52,4 | 167,0 | 64,4 | 2,1 | 127,6 | 50,2 | 18,8 | 1,9 | | | |
| CTE | | 4,6 | 3,8 | 10,4 | 4,9 | 14,8 | 5,5 | n.b. | n.b. | n.b. | | | |
| Dichte [g/cm³] | | 2,6 | 2,5 | n.b. | 2,3 | 3,7 | 2,8 | n.b. | 2,8 | n.b. | | | |

Die in Tabelle 2 angegebenen Vergleichsbeispiele VB1, VB2 und VB6 zeigen eine zu hohe Transformationstemperaturen Tg und zu niedrige thermische Ausdehnungskoeffizienten α gegenüber den erfindungsgemäßen Zusammensetzungen (AB7 bis AB8) in Tabelle 1. Vergleichsbeispiel VB3 hat zwar einen genügend niedrigen Tg, einen besseren - aber nicht ausreichenden Ausdehnungskoeffizient α (20° C - 300° C) aber eine hohe Instabilität gegenüber Elekrolyten. Vergleichsbeispiel VB4 besitzt einen günstigen Tg, aber die Beständigkeit und α sind nicht ausreichend. Vergleichsbeispiel VB5 hat eine hervorragende Beständigkeit, der Tg ist zufriedenstellend, aber der Ausdehnungskoeffizient α ist nicht ausreichend.

Überraschender Weise zeigen die Ausführungsbeispiele AB7 bis AB8 der erfindungsgemäßen Glaszusammensetzungen in Tabelle 1 ein erfindungsgemäß hohes a, (20° C - 300° C) niedriges Tg und eine hohe chemische Beständigkeit im erfindungsgemäßen Zusammensetzungsbereich gemäß Anspruch 1. Die
erfindungsgemäßen Glaszusammensetzungen stellen somit Verschmelzungsgläser, insbesondere für eine Verwendung in Batteriedurchführungen zur Verfügung, mit einer geringen Prozesstemperatur, einer Verschmelztemperatur, die geringer als der Schmelzpunkt von Aluminium ist, einen hohen Ausdehnungskoeffizient α und einer hervorragenden
Beständigkeit gegenüber Batterielektrolyten. Obwohl die Glaszusammensetzungen für eine Verwendung bei Durchführungen, insbesondere Batteriedurchführungen beschrieben ist, ist sie hierauf nicht beschränkt, andere Anwendungsgebiete sind beispielsweise der Verschluss von
Gehäusen, von Sensoren und/oder Aktuatoren. Prinzipiell sind die Durchführungen für alle Einsatzzwecke im Leichtbau geeignet, insbesondere als
Durchführungen in elektrischen Bauteilen, die leicht sein müssen und temperaturbeständig. Derartige Bauteile kommen beispielsweise im Flugzeugbau und in der Raumfahrt vor.

## Patentansprüche

1. Glas, insbesondere Lotglas, umfassend die nachfolgenden Komponenten in mol-%:
| | |
|---|---|
| P₂O₅ | 37-50 mol-%, insbesondere 39-48 mol-% |
| Al₂O₃ | 0-14 mol-%, insbesondere 2-12 mol-% |
| B₂O₃ | 2-10 mol-%, insbesondere 4-8 mol-% |
| Na₂O | 0-30 mol-%, insbesondere 0-20 mol-% |
| M₂O | 0-20 mol-%, insbesondere 12-20 mol-%, wobei M=K, Cs, Rb sein kann, |
| Li₂O | 0-42 mol-%, insbesondere 0-40 mol-%, bevorzugt 17-40 mol-% |
| BaO | 0-20 mol-%, insbesondere 0-20 mol-%, bevorzugt 5-20 mol-% |
| Bi₂O₃ | 1-10 mol-%, bevorzugt 1-5 mol-%, am bevorzugtesten 2-5 mol-% |
und das Glas bis auf Verunreinigung frei von Blei ist.

2. Glas nach Anspruch 1,
**dadurch gekennzeichnet, dass**
das Glas höchstens 35 mol-% Li₂O, insbesondere höchstens 20 mol-% Li₂O umfasst.

3. Glas nach einem der Ansprüche 1 bis 2,
**dadurch gekennzeichnet, dass**
das Glas wenigstens 17 mol-% Li₂O umfasst.

4. Glas nach einem der Ansprüche 1 bis 3,
**dadurch gekennzeichnet, dass**
das Glas 4-8 mol-% B₂O₃ umfasst.

5. Glas nach einem der Ansprüche 1 bis 4,
**dadurch gekennzeichnet, dass**
das Glas höchstens 20mol-% Na₂O umfasst.

6. Glas nach einem der Ansprüche 1 bis 5,
**dadurch gekennzeichnet dass**
das Glas höchstens 20 mol-% Bi₂O₃ umfasst.

7. Glas nach einem der Ansprüche 1 bis 6,
**dadurch gekennzeichnet, dass**
das Glas einen Ausdehnungskoeffizienten α (20° C bis 300° C) > 14-10⁻⁶/K. Insbesondere im Bereich 15·10⁻⁶/K bis 25·10⁻⁶/K, aufweist.

8. Glas nach einem der Ansprüche 1 bis 7,
**dadurch gekennzeichnet, dass**
das Glas eine Aufschmelztemperatur < 600°C aufweist.

9. Glas nach einem der Ansprüche 1 bis 8,
**dadurch gekennzeichnet, dass**
das Glas eine Halbkugeltemperatur im Bereich 500°C bis 650°C, insbesondere im Bereich 500°C bis 600°C aufweist.

10. Glas nach einem der Ansprüche 1 bis 9,
**dadurch gekennzeichnet, dass**
das Glas unter Normalatmosphäre mit Al und/oder Cu verlötbar ist.

11. Glas nach einem der Ansprüche 1 bis 10,
**dadurch gekennzeichnet, dass**
das Glas eine hohe chemische Beständigkeit gegenüber nicht wässrigen Batterieelektrolyten, insbesondere gegenüber Carbonaten, bevorzugt Carbonatmischungen mit einem Leitsalz, bevorzugt umfassend LiPF₆ aufweist.

12. Durchführung, insbesondere für eine Einrichtung, bevorzugt eine Speichereinrichtung, bevorzugt eine Lithium-Ionen-Batterie, bevorzugt ein Lithium-Ionen-Akkumulator mit einem Glas nach einem der Ansprüche 1 bis 11.

13. Einrichtung, insbesondere Speichereinrichtung, insbesondere Batterie, bevorzugt Li-Ionen-Batterie, insbesondere Li-Ionen-Akkumulator, bevorzugt mit einem Gehäuse, insbesondere einem Batteriegehäuse,
**dadurch gekennzeichnet, dass**
die Einrichtung eine Durchführung nach Anspruch 12 umfasst.

## Claims

1. Glass, in particular solder glass, comprising the following components in mol%:
P₂O₅ 37-50 mol%, in particular 39-48 mol%
Al₂O₃ 0-14 mol%, in particular 2-12 mol%
B₂O₃ 2-10 mol%, in particular 4-8 mol%
Na₂O 0-30 mol%, in particular 0-20 mol%
M₂O 0-20 mol%, in particular 12-20 mol%, wherein it can be that M = K, Cs, Rb
Li₂O 0-42 mol%, in particular 0-40 mol%, preferably 17-40 mol%
BaO 0-20 mol%, especially 0-20 mol%, preferably 5-20 mol%
Bi₂O₃ 1-10 mol%, preferably 1-5 mol%, most preferably 2-5 mol%
and the glass is free of lead, except for contamination.

2. Glass according to claim 1, **characterized in that** the glass comprises at most 35 mol% Li₂O, in particular at most 20 mol% Li₂O.

3. Glass according to one of the claims 1 to 2, **characterized in that** the glass comprises at least 17 mol% Li₂O.

4. Glass according to one of the claims 1 to 3, **characterized in that** the glass comprises 4-8 mol% B₂O₃.

5. Glass according to one of the claims 1 to 4, **characterized in that** the glass comprises at most 20 mol% Na₂O.

6. Glass according to one of the claims 1 to 5, **characterized in that** the glass comprises at most 20 mol% Bi₂O₃.

7. Glass according to one of the claims 1 to 6, **characterized in that** the glass has a coefficient of expansion α (20°C to 300°C) > 14.10⁻⁶/K, in particular in the range of 15-10⁻⁶/K to 25·10⁻⁶/K.

8. Glass according to one of the claims 1 to 7, **characterized in that** the glass has a melting temperature of <600°C.

9. Glass according to one of the claims 1 to 8, **characterized in that** the glass has a hemisphere temperature in the range of 500°C to 650°C, in particular in the range of 500°C to 600°C.

10. Glass according to one of the claims 1 to 9, **characterized in that** the glass can be soldered under normal atmosphere with Al and/or Cu.

11. Glass according to one of the claims 1 to 10, **characterized in that** the glass has a high chemical resistance to non-aqueous battery electrolytes, in particular to carbonates, preferably carbonate mixtures with a conductive salt, preferably comprising LiPF₆.

12. Feedthrough, in particular for a device, preferably a storage device, preferably a lithium-ion battery, preferably a lithium-ion accumulator, having a glass according to one of claims 1 to 11.

13. Device, in particular storage device, in particular battery, preferably Li-ion battery, in particular Li-ion accumulator, preferably with a housing, in particular a battery housing, **characterized in that** the device comprises a feedthrough according to claim 12.

## Revendications

1. Verre, en particulier verre de soudure, comprenant les composants suivants en % molaires :
| | |
|---|---|
| P₂O₅ | de 37 à 50 % molaires, en particulier de 39 à 48 % molaires |
| Al₂O₃ | de 0 à 14 % molaires, en particulier de 2 à 12 % molaires |
| B₂O₃ | de 2 à 10% molaires, en particulier de 4 à 8 % molaires |
| Na₂O | de 0 à 30 % molaires, en particulier de 0 à 20 % molaires |
| M₂O | de 0 à 20 % molaires, en particulier de 12 à 20 % molaires, où M peut être K, Cs, Rb, |
| Li₂O | de 0 à 42 % molaires, en particulier de 0 à 40 % molaires, de préférence de 17 à 40 % molaires |
| BaO | de 0 à 20 % molaires, en particulier de 0 à 20 % molaires, de préférence de 5 à 20 % molaires |
| Bi₂O₃ | de 1 à 10 % molaires, de préférence de 1 à 5 % molaires, en particulier de 2 à 5 % molaires |
et le verre ne contient pas de plomb, en dehors des impuretés.

2. Verre selon la revendication 1, **caractérisé en ce qu'**il contient au maximum 35 % molaires de Li₂O, en particulier au maximum 20 % molaires de Li₂O.

3. Verre selon l'une des revendications 1 à 2, **caractérisé en ce qu'**il contient au moins 17 % molaires de Li₂O.

4. Verre selon l'une des revendications 1 à 3, **caractérisé en ce qu'**il contient de 4 à 8 % molaires de B₂O₃.

5. Verre selon l'une des revendications 1 à 4, **caractérisé en ce qu'**il contient au maximum 20 % molaires de Na₂O.

6. Verre selon l'une des revendications 1 à 5, **caractérisé en ce qu'**il contient au maximum 20 % molaires de Bi₂O₃.

7. Verre selon l'une des revendications 1 à 6, **caractérisé en ce qu'**il présente un coefficient de dilatation α (entre 20 °C et 300 °C) > 14 × 10⁻⁶/K, en particulier compris entre 15 × 10⁻⁶/K et 25 × 10⁻⁶/K.

8. Verre selon l'une des revendications 1 à 7, **caractérisé en ce qu'**il présente une température de fusion inférieure à 600 °C.

9. Verre selon l'une des revendications 1 à 8, **caractérisé en ce qu'**il présente une température de fusion des cendres comprise entre 500 °C et 650 °C, en particulier entre 500 °C et 600 °C.

10. Verre selon l'une des revendications 1 à 9, **caractérisé en ce qu'**il peut être soudé avec de l'aluminium et/ou du cuivre sous une atmosphère normale.

11. Verre selon l'une des revendications 1 à 10, **caractérisé en ce qu'**il présente une grande résistance chimique aux électrolytes de batterie non aqueux, en particulier aux carbonates, de préférence aux mélanges de carbonates avec un sel conducteur, de préférence contenant du LiPF₆.

12. Traversée, en particulier pour une installation, en particulier une installation d'accumulation, de préférence une batterie à ions lithium, de préférence un accumulateur à ions lithium avec un verre selon l'une des revendications 1 à 11.

13. Installation, en particulier installation d'accumulation, en particulier batterie, de préférence batterie à ions lithium, en particulier accumulateur à ions lithium, de préférence avec un boîtier, en particulier avec un particulier boîtier de batterie, **caractérisé en ce que** l'installation comprend une traversée selon la revendication 12.
